Europäisches Patentamt

European Patent Office

Office européen des brevets

(19)

(11) Publication number: **0 110 627**
**B1**

(12) **EUROPEAN PATENT SPECIFICATION**

(45) Date of publication of patent specification: **11.05.88**

(51) Int. Cl.⁴: **A 43 B 17/10, B 32 B 25/08**

(21) Application number: **83307019.6**

(22) Date of filing: **17.11.83**

(54) **Polytetrafluorethylene laminate for footwear articles.**

(30) Priority: **19.11.82 US 443139**

(43) Date of publication of application:
**13.06.84 Bulletin 84/24**

(45) Publication of the grant of the patent:
**11.05.88 Bulletin 88/19**

(84) Designated Contracting States:
**AT BE CH DE FR GB IT LI LU NL SE**

(56) References cited:
**DE-A-2 737 756**
**US-A-4 194 041**

(73) Proprietor: **W.L. GORE & ASSOCIATES, INC.**
**555 Paper Mill Road P.O. Box 9329**
**Newark Delaware 19711 (US)**

(72) Inventor: **Tibbets, Douglas Austin**
**2616 Fourth Avenue North Apartment 402**
**Seattle Washington 98109 (US)**

(74) Representative: **Taylor, Derek George et al**
**MATHISEN, MACARA & CO. The Coach House**
**6-8 Swakeleys Road**
**Ickenham Uxbridge UB10 8BZ (GB)**

Courier Press, Leamington Spa, England.

# 0 110 627

**Description**

This invention relates to articles of footwear.

There has, for a long time, been a need for footwear articles which are breathable but nevertheless prevent the penetration of water from the outside and, in addition to the waterproofness and breathability of the footwear articles, have the ability to stretch, i.e. in a reversible manner. In its broad concept, "stretch" might be defined as the comfort factor in wearing apparel. Stretch offers to the consumer many advantages such as comfort, fit, reduced pucker, improved wrinkle resistance, the need for fewer sizes and greater design flexibility.

According to the present invention, there is provided an article of footwear, characterised in that it is waterproof, breathable and stretchable and comprises a laminate having selected stretch and recovery properties which includes an elastomeric hydrophilic layer having a moisture vapor transmission rate exceeding 1000 $g/m^2/day$ and, in a continuous interlocking phase therewith, a continuous hydrophobic elastomeric layer having a moisture vapor transmission rate exceeding 1000 $g/m^2/day$ and an advancing water contact angle exceeding 90 degrees.

Preferably the laminar combination further comprises a textile outer layer having selected stretch and recovery properties, and which is in laminar contact with said hydrophilic layer.

Preferably the laminar combination has been provided with its desired stretch and recovery properties by having been stretched, in one direction, at least 5% beyond its yield point and thereafter relaxed.

The present invention has been made possible by the invention of new materials described in U.S. Patents Nos. 3,953,566 and 4,194,041.

U.S. Patent No. 3,953,566 describes a porous membrane of expanded polytetrafluoroethylene which is commercially available under the trademark GORE-TEX, sold by W. L. Gore & Associates Inc., of U.S.A.. These expanded, porous PTFE membranes satisfy the requirements of being waterproof while, also being permeable to the flow of water vapor. The expanded porous PTFE membranes are inherently hydrophobic and contain very small pores that resist the entry of liquid water even at substantial pressures or when rubbed or flexed, but readily allow the flow of gases including water vapor.

U.S. Patent 4,194,041 describes a waterproof and breathable laminate that possesses a high moisture vapor transmission rate even under adverse climatic conditions.

Such laminates and modified forms thereof are commercially available from W. L. Gore & Associates, Inc. The waterproof and breathable laminate of U.S. Patent No. 4,194,041 consists of a flexible first layer of a microporous hydrophobic material having a moisture vapor transmission rate exceeding 1000 $g/m^2/day$, and an advancing water contact angle exceeding 90 degrees. This layer can be a membrane in accordance with the above-mentioned U.S. Patent No. 3,953,566. A second layer of continuous hydrophilic elastometric material is attached to the inner face of the first layer whereby the second layer has a moisture vapor transmission rate exceeding 1000 $g/m^2/day$ and does not permit the detectable passage of liquid enter therethrough at hydrostatic pressures of about 24 cm water heat and about 172 $KN/m^2$ for 30 seconds.

The present invention is based on the discovery that the waterproof and breathable laminate of U.S. Patent No. 4,194,041, can be modified to provide a stretchable article, and in particular can be formed into a stretchable article of footwear.

In particular, selected stretch and recovery properties can be imparted to the laminate by mechanically stretching the laminate such that the layer of hydrophobic material is extended, in one direction, at least 5% beyond its yield point, after which it is relaxed.

The process of stretching the laminate forms the subject of our copending patent application EP—A—0 110 626 based on U.S. Patent application No. 443,137.

The waterproof and breathable porous polytetrafluorethylene (PTFE) layered article can be mechanically stretched up to 200—300%. An elastic material was formed having an elastic recovery average of 51.5% for 100 cycles. In addition, it has been discovered, that with the mechanical stretching of the PTFE layered article, the continuous integrity of the elastomeric hydrophilic layer was not interrupted and the continuity of the hydrophobic layer was maintained, thereby retaining the proerties of breathability, waterproofness, and introducing the property of stretchability.

The hydrophobic layer is stretchable having an elongation in the machine direction of 425% and an elongation in the transverse direction of 405%, and the hydrophilic layer is stretchable having an elongation in the machine direction and elongation in the transverse direction of 154%. After the hydrophobic layer was laminated to the hydrophilic layer, it was discovered that the hydrophilic layer imparts elasticity of recovery to the stretchable hydrophobic layer. The hydrophobic/hydrophilic layered article possesses qualities unforseen in the component layers alone. (See Table 1).

The waterproof and breathable porous polytetrafluoroethylene layered article comprises a first layer of a hydrophobic material such as expanded continuous microporous polytetrafluoroethylene in laminar contact with a second layer of hydrophilic elastomeric material such as a polyether-polyurethane wherein both layers are in a continuous interlocking phase with each other.

A continuous interlocking relationship, which is preferred, can be attained by flowing the hydrophilic elastomeric material into the layer of hydrophobic material and then solidifying the hydrophilic material. For example, flowable hydrophilic monomer or prepolymer can be deposited on the hydrophobic membrane, pressed into the porous structure of the membrane, and subsequently polymerized or cured to interlock the layers.

The hydrophilic layer can be formed from such materials disclosed in U.S. Patent No. 4,194,041, the disclosure of which is incorporated herein by reference, and from hydrophilic elastomers including but not limited to elastomers made from poly(esters), poly(amides), cellulose derivatives, poly(acrylic acid) anf its homologs, natural or synthetic rubber with hydrophilic impurities, copolyozamides, polyureas, polyelectrolytes, poly(phosphates), poly(vinylamide), poly(vinylalcohol), poly(ether) and copolymers thereof, poly(thioether), polythioether-polyether, copoly(epichlorohydrin-ether), poly(sulphosphates), copolyester-ether and derivatives or mixtures thereof. The physical properties of the layered article with respect to moisture vapor transmission and resistance to transmission of liquid water closely resemble the physical properties of the expanded microporous polytetrafluoroethylene alone. The layered article is mechanically stretched beyond the yield point of the expanded microporous polytetrafluoroethylene at least 5%, and released thus forming a waterproof, breathable elastomeric expanded microporous polytetrafluoroethylene layered article (see Table 1).

3

TABLE 1
Stretch to break

| Weight/area 5"×5" (12.7 cm.sq) | Gore-tex membrane .019 g/in² (29.5 g/m) | | | Hydrophilic/hydrophobic layered article .018 g/in² (27.9 g/m) | | | Gore-tex membrane .007 g/in² (10.9 g/m²) | | | Hydrophilic/hydrophobic layered article .013 g/in² (20.2 g/m²) | | | *Hydrophilic layer thickness=.0067 in (.017 cm) | | |
|---|---|---|---|---|---|---|---|---|---|---|---|---|---|---|---|
| Sample direction | Force pounds (Newtons) | Elong in inches (cms) | % of elong to break | Force pounds (Newtons) | Elong in inches (cms) | % of elong to break | Force pounds (Newtons) | Elong in inches (cms) | % of elong to break | Force pounds (Newtons) | Elong in inches (cms) | % of elong to break | Force pounds (Newtons) | Elong in inches (cms) | % of elong to break |
| Machine Direction | 1.07 (4.76) | 18.1 (46.0) | 452% | .83 (3.69) | 11.0 (27.9) | 275% | .90 (4.0) | 9.2 (23.4) | 230% | 1.22 (5.43) | 8.2 (20.8) | 205% | 2.48 (11.03) | 3.08 (7.82) | 154% |
| Transverse Direction | .90 (4.0) | 16.2 (41.1) | 405% | 1.50 (6.67) | 5.8 (14.7) | 145% | 1.55 (6.89) | 3.0 (7.6) | 75% | 1.45 (6.45) | 4.5 (11.4) | 113% | 2.48 (11.03) | 3.08 (7.82) | 154% |

· Full Scale Load: 5 (pounds) (22.2 Netwons)
Chart Speed: 20 ins/min (50.8 cms/min)
Sample width: 0.5 in (1.27 cm)
Crosshead Speed: 20 ins/min (50.8 cms/min)
Gap: 4 ins (10.2 cms)
*Elong=Elongation

*Full Scale Load: 10 pounds (44.5 Newtons)
Chart Speed: 20 ins/min (50.8 cms/min)
Sample Width: 0.5 in (1.27 cm)
Crosshead Speed: 20 ins/min (50.8 cms/min)
Gap: 2 ins (5.1 cms)
85% recovery for 106 cycles

# 0 110 627

Unlike wicking materials, breathability is achieved by evaporation of liquid water inside the garment or on the inner surface of the membrane followed by gaseous flow or diffusion of water vapor through the memrane to the outside.

The elastomeric microporous PTFE laminate, which consists of a hydrophobic elastomeric layer of expanded PTFE and a hydrophilic elastomeric layer, with or without one or more additional layers, can be used as a layer sandwiched between the material next to the foot and the footwear outer material.

The elastomeric microporous PTFE laminate, bonded to a stretch fabric, for example lightweight nylon fabric, can be worn as an inner liner for an article of footwear.

The elastomeric microporous PTFE laminate can be used in the form of panels in combination with a non-elastomeric waterproof laminate. Panels of the elastomeric microporous PTFE laminate provide the length and width stretchability to ensure a proper fit.

The most effective method of providing a proper fit for footwear utilizing an elastomeric microporous PTFE laminate bonded to a stretch fabric is the form-fitting inner liner. This technique incorporates a form-fitting lining integral to and actually inside a boot. It is not penetrated by the stitching in the footwear upper. The form-fitting liner can be lasted with an impermeable adhesive to the mid-sole or made removable. The stretch material or panels of the stretch material provide the lateral width flexibility and length flexibility to ensure a snug good fit. Water cannot get to the foot.

The following examples are illustrative of this invention and are not intended to be limiting.

Example 1

An item of footwear was made using a waterproof, breathable elastomeric microporous PTFE laminate panel heat sealed to a non-elastomeric GORE-TEX fabric suitable for footwear.

The elastomeric microporous PTFE laminate was utilized in basically two areas. One being a strip through the center of the instep to the toe region. This would provide the lateral width flexibility necessary to ensure a snug fit. The second area being in the heel area provided the necessary length flexibility to ensure a snug fit. The items of footwear were snug fitting socks.

The socks were totally waterproof while retaining breathability. In addition, they were very lightweight, comfortable and form fitting.

The snug fitting socks were tested and without failure exceeded 800 cycles for Martindale abrasion, *wet*, exceeded 100,000 cycles on Maeser water penetration and exceeded 200,000 cycles vibrations per minute flex. Under hydrostatic testing, the socks passed no liquid water at 25 cm water pressure for 15 minutes. Immersion testing of the socks showed no penetration of water to the inside.

These socks were field tested by the following procedure. Conventional stockings were worn on the feet. The waterproof breathable stretchable sock was slipped over the conventional stocking. The test subject then wore the sock daily for 3 months and waterproofness was checked at the end of the test period by the Suter Method and the sock withstood 25 cm water pressure for 15 minutes.

## Claims

1. An article of footwear, characterised in that it is waterproof, breathable and stretchable and comprises a laminate having selected stretch and recovery properties which includes an elastomeric hydrophilic layer having a moisture vapor transmission rate exceeding 1000 $g/m^2/day$ and, in a continuous interlocking phase therewith, a continuous hydrophobic elastomeric layer having a moisture vapor transmission rate exceeding 1000 $g/m^2/day$ and an advancing water contact angle exceeding 90 degrees.

2. An article of footwear according to claim 1 characterized in that said laminar combination further comprises a textile outer layer having selected stretch and recovery properties, and which is in laminar contact with said hydrophilic layer.

3. An article of footwear according to claim 1 or claim 2 characterised in that the hydrophobic layer comprises a microporous sheet of expanded polytetrafluoroethylene.

4. An article of footwear according to any preceding claim characterised in that the selected stretch and recovery properties have been imparted by stretching the combined hydrophilic and hydrophobic layer such that the hydrophobic layer is extended, in one direction, at least 5% beyond its yield point.

5. An article of footwear according to claim 2 characterised in that the combined hydrophilic and hydrophobic layer is bonded to the outer layer by an open pattern of adhesive dots.

6. An article of footwear according to any preceding claim characterised in that it is in the form of a sock adapted to fit snugly around the foot of the wearer.

7. An article of footwear according to claim 6 characterised in that the sock has panels made of said laminar combination.

8. An article of footwear in accordance with any preceding claim characterised in that it is in the form of a liner adapted to be removably fitted within an outer article of footwear.

9. An article of footwear according to any one of claims 1 to 7 characterised in that said laminar combination forms a lining, within an outer housing for the lining.

5

**Patentansprüche**

1. Fußbekleidung, dadurch gekennzeichnet, daß sie wasserundurchlässig, atmungsfähig und dehnbar ist und einen Schichtstoff mit ausgewählten Dehnungs- und Erholungseigenschaften umfaßt, der eine elastomere hydrophile Schicht mit einer 1000 g/m²/Tag überschreitenden Wasserdampfdurchlässigkeit und, in kontinuierlicher ineinandergreifender Phase damit, eine kontinuierliche hydrophobe elastomere Schicht mit einer 1000 g/m²/Tag überschreitenden Wasserdampfdurchlässigkeit und einem 90° überschreitenden ansteigenden Wasserkontaktwinkel einschließt.

2. Fußbekleidung nach Anspruch 1, dadurch gekennzeichnet, daß die genannte Schichtstoffkombination auch eine Textilaußenschicht mit ausgewählten Dehnungs- und Erholungseigenschaften umfaßt, die mit der genannten hydrophilen Schicht in Laminarkontakt ist.

3. Fußbekleidung nach Anspruch 1 oder 2, dadurch gekennzeichnet, daß die hydrophobe Schicht eine· mikroporöse Folie aus expandiertem Polytetrafluoräthylen umfaßt.

4. Fußbekleidung nach einem der vorhergehenden Ansprüche, dadurch gekennzeichnet, daß die ausgewählten Dehnungs- und Erholungseigenschaften dadurch verliehen wurden, daß die vereinigte hydrophile und hydrophobe Schicht derart gedehnt werden, daß die hydrophobe Schicht in einer Richtung mindestens 5% über ihre Streckgrenze hinaus gestreckt wird.

5. Fußbekleidung nach Anspruch 2, dadurch gekennzeichnet, daß die vereinigte hydrophile und hydrophobe Schicht durch ein offenes Muster von Haftpunkten an die Außenschicht gebunden ist.

6. Fußbekleidung nach einem der vorhergehenden Ansprüche, dadurch gekennzeichnet, daß sie in Form einer Socke ist, die um den Fuß des Trägers eng anliegen kann.

7. Fußbekleidung nach Anspruch 6, dadurch gekennzeichnet, daß die Socke Applikationen aufweist, die aus der genannten Schichtstoffkombination hergestellt sind.

8. Fußbakleidung nach einem der vorhergehenden Ansprüche, dadurch gekennzeichnet, daß sie in Form eines Futters ist, das innerhalb einer Außenfußbekleidung entfernbar eingepaßt werden kann.

9. Fußbekleidung nach einem der Ansprüche 1 bis 7, dadurch gekennzeichnet, daß die genannte Schichtstoffkombination ein Futter innerhalb eines Außengehäuses für das Futter bildet.

**Revendications**

1. Article de chaussure, caractérisé en ce qu'il est imperméable à l'eau, aérable et étirable et comprend un stratifié ayant des propriétés d'étirage et de récupération choisies, qui comprend une couche hydrophile élastomère ayant un taux de transmission de vapeur d'humidité excédant 1000 g/m²/jour et, sous la forme d'une phase d'entrecroisement continue avec cette dernière, une couche élastomère hydrophobe continue ayant un taux de transmission de vapeur d'humidité excédant 1000 g/m²/jour et un angle de contact avec l'eau en mouvement excédant 90°.

2. Article de chaussure suivant la revendication 1, caractérisé en ce que la combinaison laminaire comprend en outre une couche extérieure de matière textile présentant des propriétés d'étirage et de récupération choisies, et qui est en contact laminaire avec la couche hydrophile précitée.

3. Article de chaussure suivant l'une ou l'autre des revendications 1 et 2, caractérisé en ce que la couche hydrophobe comprend une feuille microporeuse de polytétrafluoréthylène expansé.

4. Article de chaussure suivant l'une quelconque des revendications précédentes, caractérisé en ce que les propriétés d'étirage et de récupération choisies ont été communiquées en étirant la couche hydrophile et hydrophobe combinée, de telle sorte que la couche hydrophobe soit étendue, dans une direction, d'au moins 5% au-delà de sa limite élastique.

5. Article de chaussure suivant la revendication 2, caractérisé en ce que la couche hydrophile et hydrophobe combinée est liée à la couche extérieure par un motif ouvert de points adhésifs.

6. Article de chaussure suivant l'une quelconque des revendications précédentes, caractérisé en ce qu'il est sous la forme d'une chaussette adaptée pour bien s'ajuster autour du pied de l'utilisateur.

7. Article de chaussure suivant la revendication 6, caractérisé en ce que la chaussette comporte des pièces faites de la combinaison laminaire précitée.

8. Article de chaussure suivant l'une quelconque des revendications précédentes, caractérisé en ce qu'il est sous la forme d'un revêtement adapté pour être ajusté de façon amovible à l'intérieur d'un article extérieur de chaussure.

9. Article de chaussure suivant l'une quelconque des revendications 1 à 7, caractérisé en ce que la combinaison laminaire précitée forme un revêtement, à l'intérieur d'une enveloppe extérieure pour le revêtement.